# EUROPÄISCHE PATENTSCHRIFT

(11) **EP 1 459 855 B1**
(45) Veröffentlichungstag und Bekanntmachung des Hinweises auf die Patenterteilung: **24.08.2011**
(21) Anmeldenummer: 04000200.8
(22) Anmeldetag: 08.01.2004
(51) Int. Cl.: B25J 9/16, G01B 21/04

(54) **Verfahren und Vorrichtung zur Verbesserung der Positioniergenauigkeit eines Arbeitsroboters**
Method and device for improving the positioning accuracy of a machining robot
Méthode et dispositif pour améliorer la précision de positionnement d'un robot d'usinage

(30) Priorität: 22.01.2003 DE 10302592
(43) Veröffentlichungstag der Anmeldung: 22.09.2004
(73) Patentinhaber: CLAAS Fertigungstechnik GmbH, 48361 Beelen (DE)
(72) Erfinder: Herrmann, Günter, 33335 Gütersloh (DE); Mössner, Oswin, 48361 Beelen (DE)

(56) Entgegenhaltungen:
- EP-A- 1 172 183
- WO-A-01/00370
- WO-A-03/035332
- WO-A-03/095125
- DE-A1- 19 821 873
- DE-C1- 19 960 933

## Beschreibung

Die Erfindung betrifft ein Verfahren zur Verbesserung der Positioniergenauigkeit einer mehrachsigen Bearbeitungseinrichtung nach dem Oberbegriff des Anspruchs 1 und eine Vorrichtung zur Durchführung dieses Verfahrens nach dem Oberbegriff des Anspruchs 9.

Aus der Praxis ist es bekannt, Bearbeitungseinrichtungen wie beispielsweise Arbeitsroboter rechnergestützt in die jeweilige Arbeitspose zu fahren. Der große Nachteil einer solchen Einstellung von Bearbeitungseinrichtungen liegt aber darin, dass Lageungenauigkeiten, beispielsweise aufgrund von geometrischen Ungenauigkeiten, Getriebespiel und Elastizität nahezu unvermeidbar sind. Derartige Ungenauigkeiten müssen aber immer dann, wenn höchste Präzision in der Bearbeitung von Werkstücken gefragt ist, vermieden oder nahezu vermieden werden.

Die DE 198 21 873 offenbart einen sogenannten Industrieroboter, der zur Einhaltung hoher Fertigungsgenauigkeit temperaturabhängig in regelmäßigen Abständen kalibriert wird. Die Kalibrierung umfasst dabei die Berücksichtigung von Temperaturunterschieden im Arbeitsbereich des Industrieroboters indem an verschiednen Stellen des Arbeitsraumes Temperaturmesspunkte verteilt sind. Toleranzbedingte Lageabweichungen werden bei derartigen Systemen völlig unberücksichtigt gelassen. Die DE 19960933 offenbart ein Verfahren zur Kalibrierung eines Roboters bezüglich Arbeitspunkten und Offline-programmierten Bahnkurven. Die Nachteile diesen Dokumente sind teilweise behebt aus der EP 1172183, das ein Kalibriersystem offenbart , welches in großer Nähe zum aber außerhalb des Arbeitsbereichs des Montageroboters positioniert ist. Damit der Montageroboter diesen Kalibrierbereich erreichen kann, muss er seine in der Arbeitsstellung eingenommene Arbeitspose ändern, wobei dann das Lagerspiel der bewegten Maschinenteile und Fertigungstoleranzen die Kalibriergenauigkeit negativ beeinflussen.

Der vorliegenden Erfindung liegt daher das Problem zugrunde, ein Verfahren aufzuzeigen, durch das es möglich ist, die Arbeitspose von Robotern über Rechner genau einzustellen, wobei die bekannten Verfahren anhaftenden zuvor genannten Nachteile eliminiert werden.

Dieses Problem wird bei einem Verfahren der eingangs näher bezeichneten Art gemäß dem Kennzeichen des Anspruchs 1 dadurch gelöst, dass eine vom Rechner der Bearbeitungseinrichtung angesteuerte Arbeitspose der Bearbeitungseinrichtung und des ihr zugeordneten wenigstens einen Bearbeitungskopfes überprüft und gegebenenfalls nachjustiert wird. Dies hat insbesondere den Vorteil, dass allmählich auftretende Abweichungen zwischen den von der Bearbeitungseinrichtung zu erreichenden Sollwerten und den tatsächlich erreichten Istwerten in regelmäßigen Abständen überprüft und gegebenenfalls nachjustiert werden können, sodass die Arbeitsqualität der Bearbeitungseinrichtung nahezu unverändert hoch bleibt.

Die Überprüfung und gegebenenfalls die Nachjustierung erfolgt auf einfache und beliebig oft wiederholbare Weise dadurch, dass die Koordinaten des Arbeitsbereiches des wenigstens einen Bearbeitungskopfes auf Referenzkoordinaten eines Eichbereiches abgeglichen werden.

Um weiter zu erreichen, dass die aufgrund der großen Anzahl von Schwenkachsen schwer zu bestimmenden Längenänderungen in x-y-z-Richtung unberücksichtigt bleiben können, sind der Arbeitsbereich und der Eichbereich so zueinander angeordnet, dass die Bearbeitungseinrichtung und der ihr zugeordnete wenigstens eine Bearbeitungskopf beim Durchlaufen des Bearbeitungsbereiches und des Eichbereiches im Wesentlichen die gleiche Arbeitspose einnehmen. Auf diese Weise wird eine aufwendige Software, die diese von den jeweiligen Schwenkwinkeln abhängigen Längenänderungen mittels mathematischer Filter berücksichtigt, entbehrlich.

Nach einem weiteren Merkmal der Erfindung sind die Koordinaten des Arbeitsbereiches in einem mitbewegten Koordinatensystem und die Referenzkoordinaten des Eichbereiches für zumindest eine Arbeitspose in einem stationären Weltkoordinatensystem definiert. Eine derartige Ausführung hat vor allem den Vorteil, dass der die Referenzkoordinaten aufnehmende Eichbereich vor Umwelteinflüssen sowie Temperaturschwankungen geschützt angeordnet werden kann, sodass auf einfache Weise eine Veränderung der zur Eichung der Bearbeitungseinrichtung vorgesehenen Referenzkoordinaten vermieden werden kann.

Indem die Koordinaten des Arbeitsbereiches und die Referenzkoordinaten des Eichbereiches in dem Rechner der Bearbeitungseinrichtung hinterlegt sind, wird auf einfache Weise sichergestellt, dass auf zusätzliche Steuerund Regelungstechnik verzichtet werden kann. Dies hat zudem den Vorteil, dass die Bearbeitungseinrichtung einerseits an beliebigen Positionen im Raum ihre Arbeitspose einnehmen und dort gemäß der Koordinaten des Arbeitsbereiches Handhabungen vornehmen kann. Zum Anderen können die Koordinaten des Arbeitsbereiches und die Referenzkoordinaten des Eichbereiches ohne komplizierte Softwareunterstützung einfach aufeinander abgestimmt werden.

Bei relativ konstanten äußeren Bedingungen kann es aus Gründen der regelungstechnischen Vereinfachung von Vorteil sein, wenn der Eichvorgang nur in Abhängigkeit von der Zeit in regelmäßigen oder unregelmäßigen Abständen erfolgt. Hierbei werden im Wesentlichen nur lager- und getriebespielbedingte Ungenauigkeiten ausgeglichen. In einer vorteilhaften Weiterbildung der Erfindung kann der Eichvorgang auch in Abhängigkeit von vorgegebenen Parametern wie etwa Zeit, Temperaturänderungen und Stoßbelastungen erfolgen. Dies hat insbesondere den Vorteil, dass der Eichvorgang präziser und schneller an sich ändernde äußere Bedingungen, wie etwa bei Temperaturschwankungen oder nach kollisionsbedingten Stoßbelastungen angepasst werden kann.

Ein wesentliches Merkmal der Erfindung ist darin zu sehen, dass der Arbeitsbereich eine Vielzahl von Arbeitspunkten umfasst und der Eichbereich eine Auswahl dieser Arbeitspunkte als Referenzpunkte abbildet, wobei die Koordinaten der im Eichbereich nicht durch Referenzpunkte abgebildeten Arbeitspunkte mittels Interpolation rechnerisch ermittelt werden. Hier zeigt sich im besonderen der Vorteil der Erfindung, da komplizierte mathematische Modelle entbehrlich werden, sofern der Roboter während des Eichens die gleiche oder ähnliche Pose wie während des Arbeitens im Arbeitsbereich einnimmt.

Bei einer Vorrichtung zur Verbesserung der Positionsgenauigkeit wird der den Arbeitsbereich abbildende Eichbereich auf konstruktiv einfache Weise von einer Lehrenplatte mit einer Vielzahl von Referenzpunkten gebildet, wobei die Referenzpunkte auch eine Auswahl der im Arbeitsbereich definierten Arbeitspunkte sein können. Dabei ist es zweckmäßig, dass die Lage der Lehrenplatte an die Lage des Arbeitsbereiches in der Weise angepasst ist, dass die Bearbeitungseinrichtung und der ihr zugeordnete wenigstens eine Bearbeitungskopf im Bereich der Lehrenplatte und im Arbeitsbereich im wesentlichen die gleiche Arbeitspose einnehmen.

Bei wechselnden Bearbeitungsvorgängen innerhalb einer Arbeitspose der Bearbeitungseinrichtung ist es zweckmäßig, die Referenzpunkte auf der Lehrenplatte als Flächenraster auszulegen und die zwischen diesen liegenden tatsächlichen Arbeitskoordinaten der Bearbeitungseinrichtung durch Interpolation zu bestimmen, sodass sich eine lückenlose Abbildung des gesamten definierten Arbeitsbereiches ergibt.

Um die Lehrenplatte an geschützter Stelle positionieren zu können, so dass die Eichfläche beeinträchtigende Umwelteinflüsse (Temperatur, Schmutz, Schwingungen usw.) weitestgehend ausgeschaltet werden können, ist der Abstand der Lehrenplatte zum Arbeitsbereich in horizontaler und/oder vertikaler Richtung veränderbar, wobei die relative Lage zur Arbeitspose der Bearbeitungseinrichtung im wesentlichen erhalten bleibt.

In vorteilhafter Weiterbildung der Erfindung können die Referenzpunkte der Lehrenplatte als Bohrungen oder Bolzen ausgebildet sein, die von einem mit dem Rechner der Bearbeitungseinrichtung verbundenen Sensor abgetastet werden. Alternativ hierzu und konstruktiv vereinfacht können die Referenzpunkte der Lehrenplatte als reflektierende Punkte ausgebildet sein, die von einem mit dem Rechner der Bearbeitungseinrichtung verbundenen Messsensor abgetastet werden.

Eine konstruktiv besonders einfache Ausführung ergibt sich, wenn der Messsensor Bestandteil des Arbeitskopfes der Bearbeitungseinrichtung ist.

Weitere vorteilhafte Ausgestaltungen sind Gegenstand weiterer Unteransprüche und werden nachfolgend anhand von Zeichnungen näher erläutert.

Dabei zeigt:
- Fig. 1 -: einen Arbeitsroboter in Vorderansicht
- Fig. 2 -: den in Fig. 1 dargestellten Arbeitsroboter in Seitenansicht
- Fig. 3: eine Detailansicht nach Fig. 1

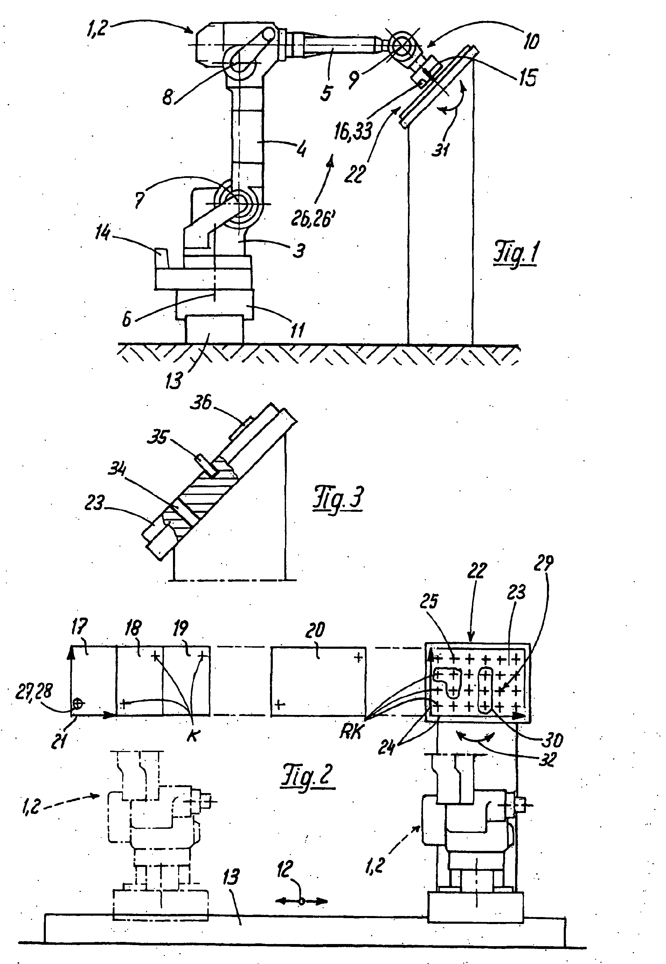

Fig. 1 zeigt eine als Arbeitsroboter 1 ausgeführte Bearbeitungseinrichtung 2, deren verschiedenen den Werkzeugträger bildenden Segmente 3-5 in an sich bekannter Weise um eine Vielzahl horizontaler und vertikaler Schwenkachsen 6-8 bewegbar sind. Zumindest eines der den Werkzeugträger bildenden Segmente 5 nimmt an seinem frontseitigen Ende eine horizontale Schwenkachse 9 auf, um die der erfindungsgemäße Bearbeitungskopf 10 verschwenkbar an diesem Segment 5 angeordnet ist. Untenseitig ist der Arbeitsroboter 1 auf einem Schlitten 11 fixiert, der gemäß Pfeilrichtung 12 auf einer Schlittenführung 13 verfahrbar angeordnet ist. Weiter nimmt der Arbeitsroboter 1 in an sich bekannter Weise eine Rechen- und Steuereinheit 14 auf, die zunächst primär die Ansteuerung der verschiedenen Schwenkachsen 6-9 und das Verfahren des Arbeitsroboters 1 entlang der Schlittenführung 13 vornimmt. Zudem ist dem Bearbeitungskopf 10 im Bereich seiner beispielsweise als Bohrer ausgeführten Arbeitsorgane 15 das noch näher zu beschreibende erfindungsgemäße Messsystem 16 zugeordnet.

Entlang der Schlittenführung kann der Arbeitsroboter 1 in ein oder mehrere sogenannte Arbeitsbereiche 17-20 verfahren werden. Im einfachsten Fall werden diese Arbeitsbereiche 17-20 von zu bearbeitenden Werkstückflächen gebildet, wobei der Bearbeitungskopf 10 des Arbeitsroboters 1 in diesen Arbeitsbereichen 17-20 beispielsweise Bohrungen in die Werkstückflächen einbringt. Damit die beispielsweise als Bohrer ausgeführten Arbeitsorgane 15 im jeweiligen Arbeitsbereich 17-20 die Bohrungen an der gewünschten Stelle einbringen, sind diese gewünschten Positionen als Koordinaten (K) des Arbeitsbereiches 17-20 in der Rechen- und Steuereinheit 14 des Arbeitsroboters 1 hinterlegt, wobei sich diese Koordinaten (K) auf ein mitbewegtes, den jeweiligen dinaten (K) auf ein mitbewegtes, den jeweiligen Arbeitsbereich 17-20 bestimmendes Koordinatensystem 21 beziehen. Weiter kann der Arbeitsroboter 1 mittels der Schlittenführung 13 in einen Eichbereich 22 verfahren werden, wobei dieser Eichbereich 22 von einer Lehrenplatte 23 gebildet wird. Dem Eichbereich 22 sind sogenannte auf ein ortsfestes Weltkoordinatensystem 24 bezogene Referenzkoordinaten (RK) zugeordnet die ebenfalls in der Rechen- und Steuereinheit 14 des Arbeitsroboters 1 hinterlegt sind. In erfindungsgemäßer Weise entsprechen die Referenzkoordinaten (RK) des Eichbereiches 22 den Koordinaten (K) des Arbeitsbereiches 17-20, wobei erstere auf ein ortsfestes Weltkoordinatensystem 24 und letztere auf das mitbewegte Koordinatensystem 21 bezogen sind. Sowohl die Koordinaten (K) des mitbewegten Koordinatensystems 21 als auch die Referenzkoordinaten (RK) können entweder fiktiv gewählte Referenzpunkte 25 des Arbeitsbereiches 17-20 und des Eichbereiches 22 oder unmittelbar konkrete Positionen (27) von beispielsweise in Werkstückflächen einzubringenden Bohrungen (28) sein. Aufgrund dessen, dass die als Arbeitsroboter 1 ausgeführte Bearbeitungseinrichtung 2 über die Schlittenführung 13 zwischen den Arbeitsbereichen 17-20 und dem Eichbereich 22 verfahrbar ist, wobei die Rechen- und Steuereinheit 14 diese Positionsänderungen steuert, kann die Bearbeitungseinrichtung 2 und insbesondere der ihr zugeordnete Bearbeitungskopf 10 sowohl die Arbeitsbereiche 17-20 als auch den Eichbereich 22 überstreichen. Da in der Rechen- und Steuereinrichtung 14 zudem relevante Koordinaten (K) der Arbeitsbereiche 17-20 und die Referenzkoordinaten (RK) des Eichbereichs 22 hinterlegt sind, ist die Rechen- und Steuereinheit 14 in der Lage die Bearbeitungseinrichtung 2 sowohl in den Arbeitsbereichen 17-20 als auch im Eichbereich 22 in von den Koordinaten (K) der Arbeitsbereiche 17-20 oder den Referenzkoordinaten (RK) des Eichbereichs 22 bestimmte Positionen zu bewegen. Damit wird es möglich die Bearbeitungseinrichtung 2 nach dem erfindungsgemäßen Verfahren in der Weise zu betreiben, dass die Arbeitspose 26 der Bearbeitungseinrichtung 2 und des ihr zugeordneten Bearbeitungskopfes 10 überprüft und erforderlichenfalls nachjustiert werden kann. Dies ist insbesondere deshalb wichtig, da durch verschiedene äußere Einflüsse und verschleißbedingte Zunahme von Bewegungsabweichungen der Bearbeitungseinrichtung 2 selbst die von der Rechenund Steuereinrichtung 14 definierten Koordinaten (K) der Arbeitsbereiche 17-20 nicht mehr korrekt angesteuert werden, sodass beispielsweise in das Werkstück einzubringende Bohrungen allmählich von ihrer Sollposition abweichen. Die Nachjustierung der Bearbeitungseinrichtung 2 erfolgt schließlich in der Weise, dass die von der Rechen- und Steuereinheit 14 in den Arbeitsbereichen 17-20 in Abhängigkeit von den jeweiligen Koordinaten (K) angesteuerten Arbeitsposen 26 mit den von den Referenzkoordinaten (RK) des Eichbereichs 22 bestimmten Soll-Arbeitsposen 26' verglichen werden können und sofern die Ist-Arbeitsposen 26 nicht mehr den Soll-Arbeitsposen 26' entsprechen diese wieder gemäß den Soll-Arbeitsposen 26' nachjustiert werden. Hierfür wird die Bearbeitungseinrichtung 2 in den Eichbereich 22 bewegt, in dem sie die von den Referenzkoordinaten (RK) bestimmten Soll-Arbeitsposen 26' einnimmt und die in der Rechen- und Steuereinheit 14 hinterlegten Koordinaten (K) der Arbeitsbereiche 17-20 anhand dieser Referenzkoordinaten (RF) korrigiert, was letztlich einer Nachjustierung der Ist-Arbeitsposen 26 der Bearbeitungseinrichtung 2 und des ihr zugeordneten Bearbeitungskopfes 10 entspricht.

Gemäß dem dargestellten Ausführungsbeispiel nehmen sowohl der Eichbereich 22 als auch der Arbeitsbereich 17-20 die gleiche der ähnliche Lage im Raum ein, wobei sich diese gleiche Lage erfindungsgemäß allein auf die Neigung des Eichbereiches 22 und des Arbeitsbereiches 17-20 in horizontaler und vertikaler Richtung beschränkt. Damit wird sichergestellt, dass die Bearbeitungseinrichtung 2 und der ihr zugeordnete Bearbeitungskopf 10 sowohl beim Durchlaufen der Arbeitsbereiche 17-20 als auch beim Durchlaufen des Eichbereiches 22 die gleiche Arbeitspose 26 einnimmt. Um den Eichbereich 22 vor störenden Umwelteinflüssen wie etwa Schwingungen, Temperaturschwankungen und Verschmutzungen geschützt anzuordnen, kann der Eichbereich 22 abweichend von der dargestellten Anordnung in vertikaler oder horizontaler Richtung verschoben zum Arbeitsbereich 17-20 jedoch mit annähernd der selben Neigung in horizontaler und vertikaler Richtung angeordnet sein. Um die Lage des Arbeitsbereiches 17-20 flexibel zu gestalten, werden die Koordinaten (K) der Arbeitsbereiche 17-20, wie bereits erwähnt, in einem mitbewegten Koordinatensystem 21 definiert, während die Referenzkoordinaten (RF) des ortsfesten Eichbereiches 22 ein stationäres sogenanntes Weltkoordinatensystem 24 definiert.

Die Abweichung der Ist-Arbeitsposen 26' von den Soll-Arbeitsposen 26 hängt von einer Vielzahl von Einflussfaktoren ab. Zu den maßgeblichen äußeren Einflüssen zählt neben der Umgebungstemperatur vor allem die auf Grund von Kollisionen mit in den Bewegungsbereich der Bearbeitungseinrichtung 2 hineingelangenden Körpern hervorgerufenen Stoßbelastungen. Zudem führen verschleißbedingte Abnutzungen an der Bearbeitungseinrichtung 2 selbst dazu, dass sich unter anderem das Spiel in den verschiedensten Lagerungen erhöht, was einen erheblichen Einfluss auf den Bewegungsablauf der Bearbeitungseinrichtung 2 und damit auf das Erreichen der vordefinierten durch die verschiedenen Koordinaten (K, RK) bestimmten Arbeitspositionen der Arbeitsorgane 15 hat. Da der Verschleiß maßgeblich von der Bewegung der Bearbeitungseinrichtung 2 bestimmt wird, kann es sinnvoll sein, das erfindungsgemäße Verfahren in Abhängigkeit von der Zeit in regelmäßigen oder unregelmäßigen Abständen durchzuführen, wobei hier sinnvoller Weise Betriebsstunden oder feste Zeitintervalle gemeint sind. Weiter kann es aber auch sinnvoll sein, das erfindungsgemäße Verfahren immer dann durchzuführen, wenn die Bearbeitungseinrichtung 2 erhöhten Stoßbelastungen, beispielsweise aufgrund von Kollisionen, ausgesetzt war oder die Bearbeitungseinrichtung 2 hohen Temperaturschwankungen unterliegt. Die Temperaturschwankungen könne dabei einerseits durch Schwankungen der Umgebungstemperatur oder durch das betriebsbedingte Erwärmen der Bearbeitungseinrichtung 2 bestimmt sein.

Um das Abarbeiten des erfindungsgemäßen Verfahrens aus Effizienzgründen in sehr kurzer Zeit zu ermöglichen, können die Referenzkoordinaten (RK) nur einen Teil der durch die Koordinaten (K) der Arbeitsbereiche 17-20 bestimmten Arbeitspunkte (27, 28) wiedergeben, sodass sich der Justiervorgang auf diese Auswahl von Arbeitspunkten (27, 28) beschränkt. Beispielsweise durch Interpolation können dann in der Rechen- und Steuereinheit 14 schnell und präzise eine Vielzahl weiterer Arbeitspunkte (27, 28) rechnerisch bestimmt werden, ohne das hierfür eine Lageänderung der Bearbeitungseinrichtung 2 erforderlich wird.

Wie bereits beschrieben wird der Eichbereich 22 von einer Lehrenplatte 23 gebildet, wobei die horizontale und vertikale Neigung der Lehrenplatte 23 ebenfalls der horizontalen und vertikalen Neigung der Arbeitsbereiche 17-20 entspricht, sodass die Bearbeitungseinrichtung 2 mit dem ihr zugeordneten Bearbeitungskopf 10 sowohl im Bereich der Lehrenplatte 23 als auch in den Arbeitsbereichen 17-20 annähernd die gleiche Arbeitspose 26 einnimmt.

Gemäß der Abbildung kann die Lehrenplatte 23 auch mit einem Raster von Referenzpunkten 29 versehen sein, wobei nicht mit diesen Referenzpunkten 29 zusammenfallende Arbeitspunkte (27, 28) wiederum durch Interpolation bestimmbar sind. Die Anordnung eines Rasters von Referenzpunkten 29 hat insbesondere den Vorteil, dass große Arbeitsbereiche 17-20 von einem einzigen Eichbereich 22 abgebildet werden können, wobei der Eichvorgang je nach Lage der Arbeitspunkte (27, 28) auf ganz bestimmte Bereiche (30) des Eichbereichs 22 beschränkt sein kann, sodass stets sichergestellt ist, dass auch bei weit voneinander entfernten Arbeitspunkten (27, 28) die Bearbeitungseinrichtung 2 während des Eichvorganges Arbeitsposen 26 einnimmt, die denen im Arbeitsbereich 17-20 entsprechen.

In einer weiteren vorteilhaften Ausgestaltung ist vorgesehen, dass die Lehrenplatte 23 in horizontaler und vertikaler Richtung ohne eine Neigungsänderung verschiebbar ist, sodass sie einerseits an verschiedenen Bearbeitungseinrichtungen 1, 2 einsetzbar ist und zudem bei ungünstigen äußeren Bedingungen an ein und derselben Bearbeitungseinrichtung 1, 2 in eine beispielsweise geschütztere Position verbracht werden kann. Um die Lehrenplatte 23 ferner an verschieden positionierte Arbeitsbereiche 17-20 anpassen zu können, kann die Lehrenplatte 23 zudem gemäß den Pfeilrichtungen 31, 32 in ihrer Neigung verändert werden, wobei die Neigungsänderung so erfolgt, dass die neuen Arbeitsbereiche 17-20 und der neue Eichbereich 22 wieder die gleiche Neigung aufweisen, sodass die Bearbeitungseinrichtung 2 und der ihr zugeordnete Bearbeitungskopf 10 sowohl beim Durchlaufen der Arbeitsbereiche 17-22 als auch des Eichbereichs 22 annähernd die gleiche Arbeitspose 26 einnehmen.

Damit die Referenzpunkte 29 auf einfache Weise von einem mit der Rechen- und Steuereinheit 14 verbundenen und in dem Bearbeitungskopf 10 der Bearbeitungseinrichtung 2 angeordneten Sensor 33 abgetastet werden können, sind die Referenzpunkte 29 im einfachsten Fall als Bohrungen 34 oder Steckbolzen 35 ausgeführt. Um den Aufwand für die Einbringung der Referenzpunkte 29 in die Lehrenplatte 23 möglichst gering zu halten, können die Referenzpunkte 29 auch als reflektierende Punkte 36 auf die Lehrenplatte 23 aufgebracht sein, die dann beispielsweise von einem optischen Sensor 33 erfasst werden.

### BEZUGSZEICHENAUFSTELLUNG

- 1: Arbeitsroboter
- 2: Bearbeitungseinrichtung
- 3: Segment
- 4: Segment
- 5: Segment
- 6: Schwenkachse
- 7: Schwenkachse
- 8: Schwenkachse
- 9: Schwenkachse
- 10: Bearbeitungskopf
- 11: Schlitten
- 12: Pfeilrichtung
- 13: Schlittenführung
- 14: Rechen- und Steuereinheit
- 15: Arbeitsorgan
- 16: Messsystem
- 17: Arbeitsbereich
- 18: Arbeitsbereich
- 19: Arbeitsbereich
- 20: Arbeitsbereich
- 21: Koordinatensystem
- 22: Eichbereich
- 23: Lehrenplatte
- 24: Weltkoordinatensystem
- 25: Referenzpunkt
- 26: Arbeitspose
- 26': Arbeitspose
- 27: konkrete Position
- 28: Bohrung
- 29: Referenzpunkt
- 30: Bereich
- 31: Pfeilrichtung
- 32: Pfeilrichtung
- 33: Sensor
- 34: Bohrung
- 35: Steckbolzen
- 36: reflektierender Punkt

- K: Koordinaten
- RK: Referenzkoordinaten

## Patentansprüche

1. Verfahren zur Verbesserung der Positioniergenauigkeit einer mehrachsigen Bearbeitungseinrichtung mit zumindest einem Bearbeitungskopf, wobei die Lageänderung der Bearbeitungseinrichtung und des ihr zugeordneten Bearbeitungskopfes über einen Rechner gesteuert wird,
und eine von der Rechen- und Steuereinheit (14) der Bearbeitungseinrichtung (1, 2) angesteuerte Arbeitspose (26, 26') der Bearbeitungseinrichtung (1, 2) und des ihr zugeordneten wenigstens einen Bearbeitungskopfes (10) überprüft und gegebenenfalls nachjustiert wird,
**dadurch gekennzeichnet,**
**dass** die Überprüfung und gegebenenfalls die Nachjustierung in der Weise erfolgt, dass die Koordinaten (K) des Arbeitsbereiches (17-20) des wenigstens einen Bearbeitungskopfes (10) auf Referenzkoordinaten (RK) eines Eichbereiches (22) abgeglichen werden und der Arbeitsbereich (17-20) und der Eichbereich (22) so zueinander angeordnet sind, dass die Bearbeitungseinrichtung (1, 2) und der ihr zugeordnete wenigstens einen Bearbeitungskopf (10) beim Durchlaufen des Arbeitsbereiches (17-20) und des Eichbereiches (22) im Wesentlichen die gleiche oder ähnliche Arbeitspose (26) einnehmen.

2. Verfahren zur Verbesserung der Positioniergenauigkeit einer mehrachsigen Bearbeitungseinrichtung nach dem vorhergehenden Anspruch, **dadurch gekennzeichnet,**
**dass** die Koordinaten (K) des Arbeitsbereiches (17-20) in einem mitbewegten Koordinatensystem (21) und die Referenzkoordinaten (RK) des Eichbereiches (22) für zumindest eine Arbeitspose (26) in einem stationären Weltkoordinatensystem (24) definiert sind.

3. Verfahren zur Verbesserung der Positioniergenauigkeit einer mehrachsigen Bearbeitungseinrichtung nach Anspruch 2, **dadurch gekennzeichnet,**
**dass** die Koordinaten (K) des Arbeitsbereiches (17-20) und die Referenzkoordinaten (RK) des Eichbereiches (22) in der Rechen- und Steuereinheit (14) der Bearbeitungseinrichtung (1, 2) hinterlegt sind.

4. Verfahren zur Verbesserung der Positioniergenauigkeit einer mehrachsigen Bearbeitungseinrichtung nach einem oder mehreren der vorhergehenden Ansprüche, **dadurch gekennzeichnet,**
**dass** der Eichvorgang in regelmäßigen oder unregelmäßigen Zeitabständen erfolgt.

5. Verfahren zur Verbesserung der Positioniergenauigkeit einer mehrachsigen Bearbeitungseinrichtung nach Anspruch 4, **dadurch gekennzeichnet,**
**dass** der Eichvorgang in Abhängigkeit von vorgegebenen Parametern, wie etwa der Zeit und/oder Temperaturänderungen und/oder Stoßbelastungen erfolgt.

6. Verfahren zur Verbesserung der Positioniergenauigkeit einer mehrachsigen Bearbeitungseinrichtung nach einem oder mehreren der vorhergehenden Ansprüche, **dadurch gekennzeichnet,**
**dass** der Arbeitsbereich (17-20) eine Vielzahl von Arbeitspunkten (27, 28) umfasst und der Eichbereich (22) eine Auswahl dieser Arbeitspunkte (27, 28) als Referenzpunkte (25, 29) abbildet, wobei die Koordinaten (K) der im Eichbereich (22) nicht durch Referenzpunkte (25, 29) abgebildeten Arbeitspunkte (27, 28) mittels Interpolation rechnerisch ermittelt werden.

7. Vorrichtung zur Verbesserung der Positioniergenauigkeit einer mehrachsigen Bearbeitungseinrichtung nach einem oder mehreren der vorhergehenden Ansprüche, **dadurch gekennzeichnet,**
**dass** der den Arbeitsbereich (17-20) abbildende Eichbereich (22) von einer Lehrenplatte (23) mit einer Vielzahl von Referenzpunkten (25, 29) gebildet wird, wobei die Referenzpunkte (25, 29) zumindest eine Auswahl der im Arbeitsbereich (17-20) definierten Arbeitspunkte (27, 28) ist.

8. Vorrichtung zur Verbesserung der Positioniergenauigkeit einer mehrachsigen Bearbeitungseinrichtung nach einem oder mehreren der vorhergehenden Ansprüche, **dadurch gekennzeichnet,**
**dass** die Lage der Lehrenplatte (23) an die Lage des Arbeitsbereiches (17-20) in der Weise angepasst ist, dass die Bearbeitungseinrichtung (1, 2) und der ihr zugeordnete wenigstens eine Bearbeitungskopf (10) im Bereich der Lehrenplatte (23) und im Arbeitsbereich (17-20) im Wesentlichen die gleiche Arbeitspose (26) einnehmen.

9. Vorrichtung zur Verbesserung der Positioniergenauigkeit einer mehrachsigen Bearbeitungseinrichtung nach einem oder mehreren der vorhergehenden Ansprüche, **dadurch gekennzeichnet,**
**dass** die Referenzpunkte (25, 29) auf der Lehrenplatte (23) als Flächenraster (29) ausgelegt sind und die zwischen diesen liegenden tatsächlichen Arbeitskoordinaten (K) der Bearbeitungseinrichtung (1, 2) durch Interpolation bestimmt werden.

10. Vorrichtung zur Verbesserung der Positioniergenauigkeit einer mehrachsigen Bearbeitungseinrichtung nach einem oder mehreren der vorhergehenden Ansprüche, **dadurch gekennzeichnet,**
**dass** der Abstand der Lehrenplatte (23) zum Arbeitsbereich (17-20) in horizontaler und/oder vertikaler Richtung veränderbar ist, wobei die relative Lage zur Arbeitspose (26) der Bearbeitungseinrichtung (1, 2) im Wesentlichen erhalten bleibt.

11. Vorrichtung zur Verbesserung der Positioniergenauigkeit einer mehrachsigen Bearbeitungseinrichtung nach einem oder mehreren der vorhergehenden Ansprüche, **dadurch gekennzeichnet,**
**dass** die Neigung der Lehrenplatte (23) an die Neigung des Arbeitsbereichs (17-20) anpassbar ist.

12. Vorrichtung zur Verbesserung der Positioniergenauigkeit einer mehrachsigen Bearbeitungseinrichtung nach einem oder mehreren der vorhergehenden Ansprüche, **dadurch gekennzeichnet,**
**dass** die Referenzpunkte (25, 29) der Lehrenplatte (23) als Bohrungen (34) oder Bolzen (35) ausgebildet sind, die von einem mit der Rechen- und Steuereinheit (14) der Bearbeitungseinrichtung (1, 2) verbundenen Sensor (33) abgetastet werden.

13. Vorrichtung zur Verbesserung der Positioniergenauigkeit einer mehrachsigen Bearbeitungseinrichtung nach einem oder mehreren der vorhergehenden Ansprüche, **dadurch gekennzeichnet**
**dass** die Referenzpunkte (25, 29) der Lehrenplatte (23) als reflektierende Punkte (36) ausgebildet sind, die von einem mit der Rechen- und Steuereinheit (14) der Bearbeitungseinrichtung (1, 2) verbundenen Sensor (33) abgetastet werden.

14. Vorrichtung zur Verbesserung der Positioniergenauigkeit einer mehrachsigen Bearbeitungseinrichtung nach einem oder mehreren der vorhergehenden Ansprüche, **dadurch gekennzeichnet,**
**dass** der Sensor (33) Bestandteil des Arbeitskopfes (10) der Bearbeitungseinrichtung (1, 2) ist.

15. Vorrichtung zur Verbesserung der Positioniergenauigkeit einer mehrachsigen Bearbeitungseinrichtung nach einem oder mehreren der vorhergehenden Ansprüche, **dadurch gekennzeichnet,**
**dass** die Bearbeitungseinrichtung (1, 2) über eine Vielzahl von Bearbeitungsköpfen (10) verfügt.

## Claims

1. A method of improving the positional accuracy of a multi-axis working device having at least one working head, wherein the change in position of the working device and the working head associated therewith is controlled by way of a computer,
and a working pose (26, 26') of the working device (1, 2) and the at least one working head (10) associated therewith, which working pose is actuated by the computing and control unit (14) of the working device (1, 2), is checked and possibly re-adjusted,
**characterised in that**
checking and possibly re-adjustment is effected in such a way that the co-ordinates (K) of the working region (17-20) of the at least one working head (10) are compared to reference co-ordinates (RK) of a calibration region (22) and the working region (17-20) and the calibration region (22) are so arranged relative to each other than the working device (1, 2) and the at least one working head (10) associated therewith assume substantially the same or similar working pose (26) when passing through the working region (17-20) and the calibration region (22).

2. A method of improving the positional accuracy of a multi-axis working device according to the preceding claim **characterised in that** the co-ordinates (K) of the working region (17-20) are defined in a co-ordinate system (21) which is also moved therewith and the reference co-ordinates (RK) of the calibration region (22) are defined for at least one working pose (26) in a stationary global co-ordinate system (24).

3. A method of improving the positional accuracy of a multi-axis working device according to claim 2 **characterised in that** the co-ordinates (K) of the working region (17-20) and the reference co-ordinates (RK) of the calibration region (22) are stored in the computing and control unit (14) of the working device (1, 2).

4. A method of improving the positional accuracy of a multi-axis working device according to one or more of the preceding claims **characterised in that** the calibration operation is effected at regular or irregular time intervals.

5. A method of improving the positional accuracy of a multi-axis working device according to claim 4 **characterised in that** the calibration operation is effected in dependence on predetermined parameters such as for example time and/or temperature changes and/or shock loadings.

6. A method of improving the positional accuracy of a multi-axis working device according to one or more of the preceding claims **characterised in that** the working region (17-20) includes a plurality of working points (27, 28) and the calibration region (22) represents a selection of said working points (27, 28) as reference points (25, 29), wherein the co-ordinates (K) of the working points (27, 28) which are not represented by reference points (25, 29) in the calibration region (22) are ascertained by computation by means of interpolation.

7. Apparatus for improving the positional accuracy of a multi-axis working device according to one or more of the preceding claims **characterised in that** the calibration region (22) representing the working region (17-20) is formed by a gauge plate (23) having a plurality of reference points (25, 29), wherein the reference points (25, 29) is at least a selection of the working points (27, 28) defined in the working region (17-20).

8. Apparatus for improving the positional accuracy of a multi-axis working device according to one or more of the preceding claims **characterised in that** the position of the gauge plate (23) is adapted to the position of the working region (17-20) in such a way that the working device (1, 2) and the at least one working head (10) associated therewith assume substantially the same working pose (26) in the region of the gauge plate (23) and in the working region (17-20).

9. Apparatus for improving the positional accuracy of a multi-axis working device according to one or more of the preceding claims **characterised in that** the reference points (25, 29) on the gauge plate (23) are in the form of a surface grid (29) and the actual working co-ordinates (K) which are disposed therebetween of the working device (1, 2) are determined by interpolation.

10. Apparatus for improving the positional accuracy of a multi-axis working device according to one or more of the preceding claims **characterised in that** the spacing of the gauge plate (23) relative to the working region (17-20) is variable in the horizontal and/or vertical direction, wherein the relative position of the working pose (26) of the working device (1, 2) is substantially retained.

11. Apparatus for improving the positional accuracy of a multi-axis working device according to one or more of the preceding claims **characterised in that** the inclination of the gauge plate (23) can be adapted to the inclination of the working region (17-20).

12. Apparatus for improving the positional accuracy of a multi-axis working device according to one or more of the preceding claims **characterised in that** the reference points (25, 29) of the gauge plate (23) are in the form of bores (34) or pins (35) which are sensed by a sensor (33) connected to the computing and control unit (14) of the working device (1, 2).

13. Apparatus for improving the positional accuracy of a multi-axis working device according to one or more of the preceding claims **characterised in that** the reference points (25, 29) of the gauge plate (23) are in the form of reflecting points (36) which are sensed by a sensor (33) connected to the computing and control unit (14) of the working device (1, 2).

14. Apparatus for improving the positional accuracy of a multi-axis working device according to one or more of the preceding claims **characterised in that** the sensor (33) is a component part of the working head (10) of the working device (1, 2).

15. Apparatus for improving the positional accuracy of a multi-axis working device according to one or more of the preceding claims **characterised in that** the working device (1, 2) has a plurality of working heads (10).

## Revendications

1. Procédé pour améliorer la précision de positionnement d'un dispositif d'usinage multiaxial, comprenant au moins une tête d'usinage, selon lequel le changement de position du dispositif d'usinage et de la tête d'usinage qui lui est associée est commandé par un ordinateur,
et un positionnement de travail (26, 26'), sélectionné par l'unité de calcul et de commande (14) du dispositif d'usinage (1, 2), pour le dispositif d'usinage (1, 2) et la tête d'usinage (10), au nombre d'au moins une, qui lui est associée, est vérifié et, le cas échéant, ajusté,
**caractérisé par le fait que**
la vérification et, le cas échéant, l'ajustage sont effectués de manière telle que les coordonnées (K) de la zone de travail (17-20) de la tête d'usinage (10), au nombre d'au moins une, soient adaptées à des coordonnées de référence (RK) d'une zone d'étalonnage (22), et la zone de travail (17-20) et la zone d'étalonnage (22) soient disposées l'une par rapport à l'autre de façon à ce que, lors du passage dans la zone de travail (17-20) et la zone d'étalonnage (22), le dispositif d'usinage (1, 2) et la tête d'usinage (10), au nombre d'au moins une, qui lui est associée, adoptent sensiblement le même positionnement de travail (26) ou un positionnement similaire.

2. Procédé pour améliorer la précision de positionnement d'un dispositif d'usinage multiaxial selon la revendication précédente, **caractérisé par le fait que**
les coordonnées (K) de la zone de travail (17-20) sont définies dans un système de coordonnées (21) associé au déplacement, et les coordonnées de référence (RK) de la zone d'étalonnage (22) sont définies pour au moins un positionnement de travail (26), dans un système de coordonnées universelles (24) stationnaire.

3. Procédé pour améliorer la précision de positionnement d'un dispositif d'usinage multiaxial selon la revendication 2, **caractérisé par le fait que**
les coordonnées (K) de la zone de travail (17-20) et les coordonnées de référence (RK) de la zone d'étalonnage (22) sont enregistrées dans l'unité de calcul et de commande (14) du dispositif d'usinage (1, 2).

4. Procédé pour améliorer la précision de positionnement d'un dispositif d'usinage multiaxial selon une ou plusieurs des revendications précédentes, **caractérisé par le fait que**
l'opération d'étalonnage est effectuée à intervalles réguliers ou irréguliers.

5. Procédé pour améliorer la précision de positionnement d'un dispositif d'usinage multiaxial selon la revendication 4, **caractérisé par le fait que**
l'opération d'étalonnage est effectuée en fonction de paramètres prédéterminés, tels que le temps et/ou des variations de température et/ou des charges par à-coups.

6. Procédé pour améliorer la précision de positionnement d'un dispositif d'usinage multiaxial selon une ou plusieurs des revendications précédentes, **caractérisé par le fait que**
la zone de travail (17-20) comprend une pluralité de points de travail (27, 28), et la zone d'étalonnage (22) reproduit en tant que points de référence (25, 29) une sélection de ces points de travail (27, 28), les coordonnées (K) des points de travail (27, 28), qui ne sont pas reproduits par des points de référence (25, 29) dans la zone d'étalonnage (22), étant déterminées par le calcul, par interpolation.

7. Dispositif pour améliorer la précision de positionnement d'un dispositif d'usinage multiaxial selon une ou plusieurs des revendications précédentes, **caractérisé par le fait que**
la zone d'étalonnage (22) reproduisant la zone de travail (17-20) est constituée d'un montage d'usinage (23) comportant une pluralité de points de référence (25, 29), les points de référence (25, 29) constituant au moins une sélection des points de travail (27, 28) définis dans la zone de travail (17-20).

8. Dispositif pour améliorer la précision de positionnement d'un dispositif d'usinage multiaxial selon une ou plusieurs des revendications précédentes, **caractérisé par le fait que**
la position du montage d'usinage (23) est adaptée à la position de la zone de travail (17-20) de manière telle que le dispositif d'usinage (1, 2) et la tête d'usinage (10), au nombre d'au moins une, qui lui est associée, adoptent sensiblement le même positionnement de travail (26) dans la région du montage d'usinage (23) et dans la zone de travail (17-20).

9. Dispositif pour améliorer la précision de positionnement d'un dispositif d'usinage multiaxial selon une ou plusieurs des revendications précédentes, **caractérisé par le fait que**
les points de référence (25, 29) sur le montage d'usinage (23) sont réalisés sous forme de trame (29), et les coordonnées de travail (K) effectives du dispositif d'usinage (1, 2), situées entre ces points, sont déterminées par interpolation.

10. Dispositif pour améliorer la précision de positionnement d'un dispositif d'usinage multiaxial selon une ou plusieurs des revendications précédentes, **caractérisé par le fait que**
la distance du montage d'usinage (23) par rapport à la zone de travail (17-20) peut être modifiée dans la direction horizontale et/ou verticale, la position par rapport au positionnement de travail (26) du dispositif d'usinage (1, 2) étant sensiblement conservée.

11. Dispositif pour améliorer la précision de positionnement d'un dispositif d'usinage multiaxial selon une ou plusieurs des revendications précédentes, **caractérisé par le fait que**
l'inclinaison du montage d'usinage (23) peut être adaptée à l'inclinaison de la zone de travail (17-20).

12. Dispositif pour améliorer la précision de positionnement d'un dispositif d'usinage multiaxial selon une ou plusieurs des revendications précédentes, **caractérisé par le fait que**
les points de référence (25, 29) du montage d'usinage (23) sont réalisés sous forme de trous (34) ou de plots (35), qui sont balayés par un capteur (33) relié à l'unité de calcul et de commande (14) du dispositif d'usinage (1, 2).

13. Dispositif pour améliorer la précision de positionnement d'un dispositif d'usinage multiaxial selon une ou plusieurs des revendications précédentes, **caractérisé par le fait que**
les points de référence (25, 29) du montage d'usinage (23) sont réalisés sous forme de points réfléchissants (36), qui sont balayés par un capteur (33) relié à l'unité de calcul et de commande (14) du dispositif d'usinage (1, 2).

14. Dispositif pour améliorer la précision de positionnement d'un dispositif d'usinage multiaxial selon une ou plusieurs des revendications précédentes, **caractérisé par le fait que**
le capteur (33) fait partie de la tête d'usinage (10) du dispositif d'usinage (1, 2).

15. Dispositif pour améliorer la précision de positionnement d'un dispositif d'usinage multiaxial selon une ou plusieurs des revendications précédentes, **caractérisé par le fait que**
le dispositif d'usinage (1, 2) est doté de plusieurs têtes d'usinage (10).
